# EUROPEAN PATENT APPLICATION

(11) **EP 4 722 935 A1**
(43) Date of publication of application: **08.04.2026**
(21) Application number: 24835024.1
(22) Date of filing: 04.01.2024
(51) Int. Cl.: G06F 16/14

(54) **FILE QUERY METHOD AND APPARATUS, COMPUTER DEVICE, AND COMMUNICATION SYSTEM**

(30) Priority: 04.07.2023 CN 202310815614
(71) Applicant: Huawei Technologies Co., Ltd., Shenzhen, Guangdong 518129 (CN)
(72) Inventor: ZHANG, Mingqian, Shenzhen, Guangdong 518129 (CN); YANG, Jing, Shenzhen, Guangdong 518129 (CN)
(74) Representative: Grünecker Patent- und Rechtsanwälte PartG mbB
(86) International application number: PCT/CN2024/070614
(87) International publication number: WO 2025/007535

(57) **Abstract**

A file query method and apparatus, a computer device, and a communication system are disclosed, and relate to the computer field. The method includes: obtaining a file attribute of a target directory by sending a file query request that indicates to query the file attribute of the target directory, where the file attribute of the target directory indicates a file organization structure attribute of the target directory, and the file attribute of the target directory may include file attributes of a plurality of files in the target directory. Compared with a case in which a client needs to send a file query request for each file, according to the file query method provided in this application, the client sends a file query request once, where the request indicates to query the file attributes of the plurality of files in the target directory, and receives attribute results of the plurality of files in the target directory, to improve file query efficiency. The query request and the attribute results are transmitted only once in a network, to reduce network bandwidth overheads.

## Description

This application claims priority to Chinese Patent Application No. 202310815614.4, filed with the China National Intellectual Property Administration on July 4, 2023 and entitled "FILE QUERY METHOD AND APPARATUS, COMPUTER DEVICE, AND COMMUNICATION SYSTEM", which is incorporated herein by reference in its entirety.

### TECHNICAL FIELD

This application relates to the computer field, and in particular, to a file query method and apparatus, a computer device, and a communication system.

### BACKGROUND

Currently, a client may mount a shared file of a server based on a network file system, and remotely access the shared file of the server through a network. For example, the client queries an attribute of a file (for example, a location and a size of the file) in the server. Generally, the client first obtains a file list from the server, and then queries attributes of files in the file list. A larger quantity of files indicates a larger quantity of query requests that need to be sent by the client, resulting in low file query efficiency and high network bandwidth overheads.

### SUMMARY

This application provides a file query method and apparatus, a computer device, and a communication system, to resolve problems of low file query efficiency and high network bandwidth overheads.

According to a first aspect, this application provides a file query method. The method includes: obtaining a file attribute of a target directory by sending a file query request that indicates to query the file attribute of the target directory, where the file attribute of the target directory indicates a file organization structure attribute of the target directory.

A file organization structure may include a plurality of levels of directories, for example, a subdirectory, a first-level subdirectory, and a second-level subdirectory. A directory at each level may include a plurality of files or folders. The file attribute of the target directory may include file attributes of a plurality of files in the target directory. Compared with a case in which a client needs to send a file query request for each file, according to the file query method provided in this application, the client sends a file query request once, where the request indicates to query the file attributes of the plurality of files in the target directory, and receives attribute results of the plurality of files in the target directory, to improve file query efficiency. The query request and the attribute results are transmitted only once in a network, to reduce network bandwidth overheads.

In addition, compared with a case in which the client caches a file attribute of a file, and collects statistics on file attributes of a plurality of files, according to the file query method provided in this application, the client may receive a statistics collection result of the file attributes of the plurality of files without caching the file attributes of the files and collecting statistics on and summarizing the file attributes of the files, to reduce consumption of memory resources and computing resources.

According to a second aspect, this application provides a file query method. The method includes: receiving a file query request that indicates to query a file attribute of a target directory, where the file attribute of the target directory indicates a file organization structure attribute of the target directory; obtaining a file attribute of the target directory based on the received file query request; and sending the obtained file attribute of the target directory.

After receiving the file query request sent by a client, a server may collectively summarize attributes such as a size of the target directory, occupied space, a total quantity of included files, and a total quantity of included folders. Optionally, the server queries attributes such as sizes and occupied space of folders included in the target directory, or attributes such as sizes and occupied space of files included in the target directory. Optionally, the server collectively summarizes attributes such as a quantity, sizes, and occupied space of folders included in the target directory, or attributes such as a quantity, sizes, and occupied space of files included in the target directory. Instead of performing a file attribute query operation on each file in the target directory, the client sends a file query request once to control the server to perform file attribute query operations on a plurality of files, to improve file query efficiency.

In a possible implementation, the file query request includes an attribute parameter of at least one of a directory, a file, or a folder.

In another possible implementation, an attribute parameter includes at least one of a size, occupied space, a quantity, or a file type.

The file query request may meet different query granularities. The file query request includes different query granularities, and attribute parameters of query granularities at all levels are also different. The attribute parameter of the directory may include a size, occupied space, a quantity of included files, a quantity of included folders, a location, creation time, a file type, and the like. The attribute parameter of the file may include a size, occupied space, a location, creation time, a file type, and the like. The attribute parameter of the folder may include a size, occupied space, a quantity of included files, a location, creation time, and the like.

In another possible implementation, the file attribute of the target directory includes at least one of an attribute of the target directory, a file attribute of a file included in the target directory, or a folder attribute of a folder included in the target directory. The target directory may include only a file, or may include a file and a folder, and the folder may further include a file and a subfolder. According to a requirement of a query granularity, attributes of all files and all folders included in the target directory may be obtained, or file attributes of any file or all files included in the target directory may be obtained, or folder attributes of any folder or all folders included in the target directory may be obtained.

In another possible implementation, the target directory includes a root directory or a subdirectory at any level that is included in the root directory.

In another possible implementation, the file query request further includes a check value, and the check value includes a client identifier and a restart verification identifier. The client identifier may uniquely indicate a client, and the restart verification identifier may indicate whether the client is restarted. Because a plurality of clients may send file query requests to a same server, the server checks each client based on a check value in the file query request, to ensure uniqueness of the file query request sent by the client.

In another possible implementation, sending the file query request includes: sending the file query request in a synchronous manner.

In another possible implementation, sending the file query request includes: sending the file query request in an asynchronous manner.

To avoid excessively long waiting time for receiving a file attribute result, the client may send the file query request in the synchronous manner or in the asynchronous manner. In a case of a synchronous query request, the server can feed back the file attribute result within a time threshold, to reduce waiting time of the client. In a case of an asynchronous query request, the client sends a subsequent file query request after sending a current file query request without waiting for the server to return a file attribute result corresponding to the current request before sending the subsequent request. After completing a file attribute query, the server sends a file attribute result to the client.

In another possible implementation, a format of the file query request is set based on a file access protocol, and the file access protocol includes any one of a server message block (SMB), a network file system (NFS), or a network attached storage (NAS). The format of the file query request that is set based on the file access protocol complies with a design standard of the International Internet Engineering Task Force (IETF). A standard format of a file query request is compatible with querying file attributes in different types of storage devices.

In another possible implementation, the method further includes: displaying the file attribute of the target directory. A user may clearly and intuitively learn of the file attribute of the queried target directory by displaying the file attribute result on an interface of the client, to help the user organize a structure of the target directory and arrange the files included in the target directory.

According to a third aspect, this application provides a file query apparatus, where the apparatus includes a processing module and a communication module. The processing module is configured to generate a file query request. The communication module is configured to send the file query request, where the file query request indicates to query a file attribute of a target directory, the file attribute of the target directory indicates a file organization structure attribute of the target directory; and the communication module is further configured to receive the file attribute of the target directory.

According to a fourth aspect, this application provides a file query apparatus, where the apparatus includes a communication module and a query module. The communication module is configured to receive a file query request, where the file query request indicates to query a file attribute of a target directory, and the file attribute of the target directory indicates a file organization structure attribute of the target directory. The query module is configured to obtain the file attribute of the target directory based on the file query request. The communication module is further configured to send the file attribute of the target directory.

In a possible implementation, the file query request includes an attribute parameter of at least one of a directory, a file, or a folder.

In another possible implementation, an attribute parameter includes at least one of a size, occupied space, a quantity, or a file type.

In another possible implementation, the file attribute of the target directory includes at least one of an attribute of the target directory, a file attribute of a file included in the target directory, or a folder attribute of a folder included in the target directory.

In another possible implementation, the target directory includes a root directory or a subdirectory at any level that is included in the root directory.

In another possible implementation, the file query request further includes a check value, and the check value includes a client identifier and a restart verification identifier.

In another possible implementation, when sending the file query request, the communication module is specifically configured to send the file query request in a synchronous manner.

In another possible implementation, when sending the file query request, the communication module is specifically configured to send the file query request in an asynchronous manner.

In another possible implementation, a format of the file query request is set based on a file access protocol, and the file access protocol includes any one of an SMB, an NFS, or a NAS.

In another possible implementation, the foregoing apparatus further includes a display module, configured to display the file attribute of the target directory.

According to a fifth aspect, this application provides a computer device. The computer device includes a processor and a memory. The memory is configured to store a set of computer instructions. When the processor is used as an execution device according to any one of the first aspect or the possible implementations of the first aspect to execute the set of computer instructions, the processor performs an operation step of the file query method according to any one of the first aspect or the possible implementations of the first aspect. Alternatively, when the processor is used as an execution device according to any one of the second aspect or the possible implementations of the second aspect to execute the set of computer instructions, the processor performs an operation step of the file query method according to any one of the second aspect or the possible implementations of the second aspect.

According to a sixth aspect, this application provides a communication system. The communication system includes a client and a plurality of servers. The client is configured to perform an operation step of the file query method according to any one of the first aspect or the possible implementations of the first aspect. The server is configured to perform an operation step of the file query method according to any one of the second aspect or the possible implementations of the second aspect.

According to a seventh aspect, this application provides a computer-readable storage medium. The computer-readable storage medium includes computer software instructions. When the computer software instructions are run in a computing device, a computer device is enabled to perform an operation step of the file query method according to any one of the first aspect or the possible implementations of the first aspect. Alternatively, when the computer software instructions are run in a computing device, a computer device is enabled to perform an operation step of the file query method according to any one of the second aspect or the possible implementations of the second aspect.

According to an eighth aspect, this application provides a computer program product. When the computer program product runs on a computer, a computer device is enabled to perform an operation step of the file query method according to any one of the first aspect or the possible implementations of the first aspect. Alternatively, when the computer program product runs on a computer, a computer device is enabled to perform an operation step of the file query method according to any one of the second aspect or the possible implementations of the second aspect.

For technical effects brought by any design manner of the third aspect to the eighth aspect, refer to technical effects brought by the first aspect or different design manners of the first aspect, or refer to technical effects brought by the second aspect or different design manners of the second aspect. Details are not described herein again.

Based on the implementations provided in the foregoing aspects, the implementations in this application may further be combined to provide more implementations.

### BRIEF DESCRIPTION OF DRAWINGS

FIG. 1 is a diagram of a file query method according to a conventional technology;
FIG. 2 is a diagram of a structure of a communication system according to this application;
FIG. 3 is a schematic flowchart of a file query method according to this application;
FIG. 4 is a diagram of an interface for displaying a file attribute of a target directory according to this application;
FIG. 5 is a diagram of a process in a synchronous query manner according to this application;
FIG. 6 is a diagram of a process in an asynchronous query manner according to this application;
FIG. 7 is a diagram of a structure of a file query apparatus according to this application;
FIG. 8 is a diagram of a structure of another file query apparatus according to this application; and
FIG. 9 is a diagram of a structure of a computer device according to this application.

### DESCRIPTION OF EMBODIMENTS

A file (file) may refer to a segment of data stored in a computer by using a computer hard disk drive as a carrier.

A folder (folder) may refer to a data structure for organizing and managing a file. The folder may include at least one file. Folders may be nested, to be specific, one folder may include at least one subfolder. Files may be classified and stored by using a nesting function of the folders for easy search and management.

A file organization structure (File Organization Structure) may refer to a logical structure of a file. The file organization structure may include a plurality of levels of directories, for example, a subdirectory, a first-level subdirectory, and a second-level subdirectory. A directory at each level may include a plurality of files or folders.

A network file system (Network File System, NFS) is a file sharing protocol in a distributed file system, to be specific, computers using different operating systems (such as Linux, UNIX, and Windows) may share data through a network by using the network file system, so that accessing a file in a remote computer is similar to accessing a file in a local computer. This implements a fast and reliable file sharing service. In other words, a file directory in the remote computer is mounted to a local directory in the local computer, so that accessing a file in the remote computer is implemented by accessing the local directory.

A network attached storage (Network Attached Storage, NAS) refers to a data storage device that is connected to a network and that has a storage function. The NAS is data-centric, centrally manages data, and provides a file service.

Mounting (mount) means that a directory in a remote computer is connected to a subdirectory in a root directory in a local computer, so that accessing the subdirectory in the local computer is equivalent to accessing content of the directory in the remote computer. The subdirectory in the root directory in the local computer may be an empty directory. A name of the subdirectory in the local computer may be consistent with a name of the directory mounted in the remote computer.

Mounting is very common in a Linux operating system. A top-level directory in a file in a storage device is connected to a directory (for example, a bin directory, a home directory, a lib directory, or an empty directory) in a Linux root directory, so that accessing the directory is equivalent to accessing the file in the storage device.

A client may obtain an attribute of a file (for example, a location of the file in a disk, a file size, or a file type) through querying. The attribute of the file may help users easily search for and arrange the file. For example, a NAS client mounts a shared file in a NAS server by using an NFS and remotely queries an attribute of a file in the NAS server through a network.

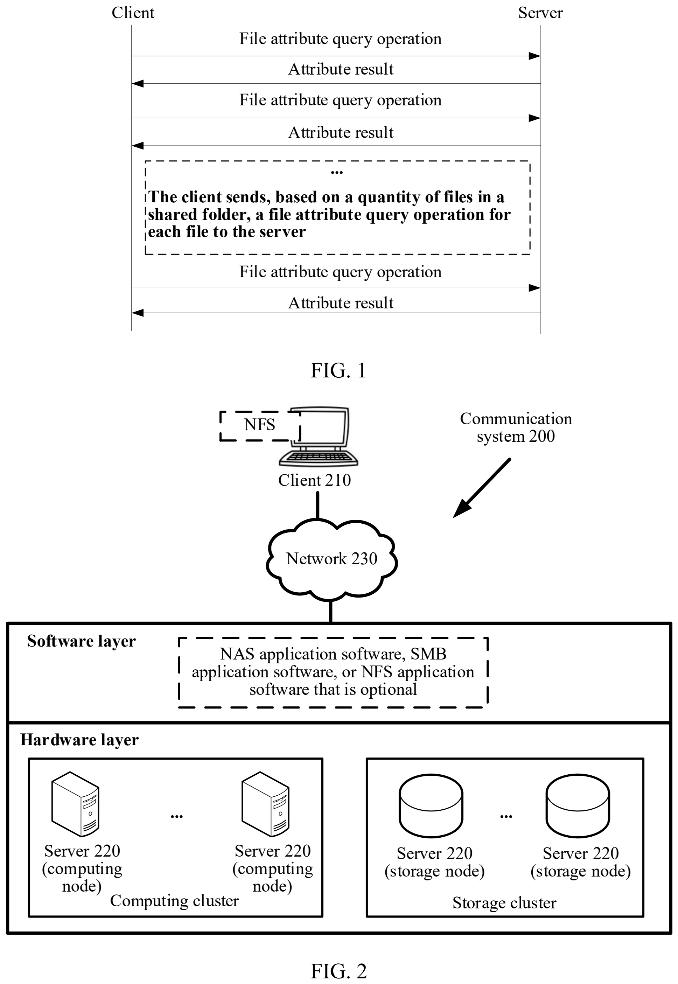

Generally, the client first obtains a file list from the server, where the file list includes a plurality of files; and then queries attributes of the files in the file list. FIG. 1 is a diagram of a file query method according to a conventional technology. After mounting a shared folder, a client queries an attribute of the folder (for example, finds that the folder includes xx subfolders and xx files, and a size of the folder, namely, a total size of the subfolders and the files, is xx MB), and needs to perform an operation shown in FIG. 1: The client sends, based on a quantity of files included in each subfolder in a folder directory, a file attribute query request for each file to a server. The server returns attribute results of the files, for example, sizes of the files, to the client. The client may first summarize the attribute results of the files to obtain an attribute result of a subfolder, for example, a size of the subfolder and a quantity of files included in the subfolder. Then, the client summarizes attribute results of the subfolders to obtain an attribute result of the shared folder, for example, the size of the folder, a quantity of subfolders included in the folder, and a quantity of files included in the folder.

However, a larger quantity of files included in the folder indicates a larger quantity of file attribute query requests sent by the client to the server. Therefore, the client receives a larger quantity of attribute results returned by the server, resulting in low file query efficiency. A large quantity of query requests and attribute results are transmitted in a network, resulting in high network bandwidth overheads. In addition, in a query process, a client needs to cache attribute results of files in a file list, resulting in consumption of a large quantity of memory resources. The client further needs to collect statistics on and summarize the attribute results of the files, resulting in consumption of a large quantity of computing resources.

To resolve problems of low file query efficiency and high network bandwidth overheads, this application provides a file query method. To be specific, a file attribute of a target directory is obtained by sending a file query request that indicates to query the file attribute of the target directory. The file attribute of the target directory indicates a file organization structure attribute of the target directory.

The file attribute of the target directory may include file attributes of a plurality of files in the target directory. Compared with a case in which a client needs to send a file query request for each file, according to the file query method provided in this application, the client sends a file query request once, where the request indicates to query the file attributes of the plurality of files in the target directory, and receives attribute results of the plurality of files in the target directory, to improve file query efficiency. The query request and the attribute results are transmitted only once in a network, to reduce network bandwidth overheads.

In addition, compared with a case in which the client caches a file attribute of a file, and collects statistics on file attributes of a plurality of files, according to the file query method provided in this application, the client may receive a statistics collection result of the file attributes of the plurality of files without caching the file attributes of the files and collecting statistics on and summarizing the file attributes of the files, to reduce consumption of memory resources and computing resources.

The following describes in detail the file query method provided in this application with reference to the accompanying drawings.

In this application, the client queries the file attribute of the target directory stored in a server. An application scenario includes but is not limited to querying the file attribute in a NAS, an SMB, or an NFS. For example, NAS, SMB, or NFS application software may be installed on both the client and the server. The client may remotely access, through the network, files stored in the server, to obtain file attributes.

FIG. 2 is a diagram of a structure of a communication system according to this application. As shown in FIG. 2, the communication system 200 includes a client 210, a server 220, and a network 230.

According to different application scenarios, the client 210 may be a NAS client, or may be an SMB client of a Windows operating system, or may be an NFS client of a Linux operating system or a Unix operating system. The client 210 may send a file query request to the server 220 through the network 230, where the network 230 may be an internet, a local area network, or another network. The file query request indicates to query a file attribute of a target directory. For example, the file query request indicates to query a file attribute of a file in a file organization structure of the target directory. A format of the file query request may be set based on a NAS protocol, an SMB protocol, or an NFS protocol.

The server 220 may be deployed in a form of a cluster. A server cluster may include but is not limited to a computing cluster and a storage cluster. A server in the computing cluster may also be referred to as a computing node, and a server in the storage cluster may also be referred to as a storage node. According to different application scenarios, the server 220 may be a NAS server, or may be an SMB server of a Windows operating system, or may be an NFS server of a Linux operating system or a Unix operating system. The server 220 may receive, through the network 230, the file query request sent by the client 210, and provide a resource service for the request of the client 210, for example, provide a function and an interface that are for querying a file attribute to obtain the file attribute of the target directory, and send the file attribute of the target directory to the client 210.

Herein, the client 210 and the server 220 may refer to computer devices connected to the network. When the computer device is used as the client 210, the computer device may include a chassis, a display screen, and a keyboard, and may further include another component, for example, may further include a hard disk drive, an optical disc drive, a power supply, a heat dissipation system, and another input/output controller and interface. When the computer device is used as the server 220, the computer device may include a chassis, and may further include another component, for example, may further include a hard disk drive, a power supply, a heat dissipation system, and another input/output controller and interface.

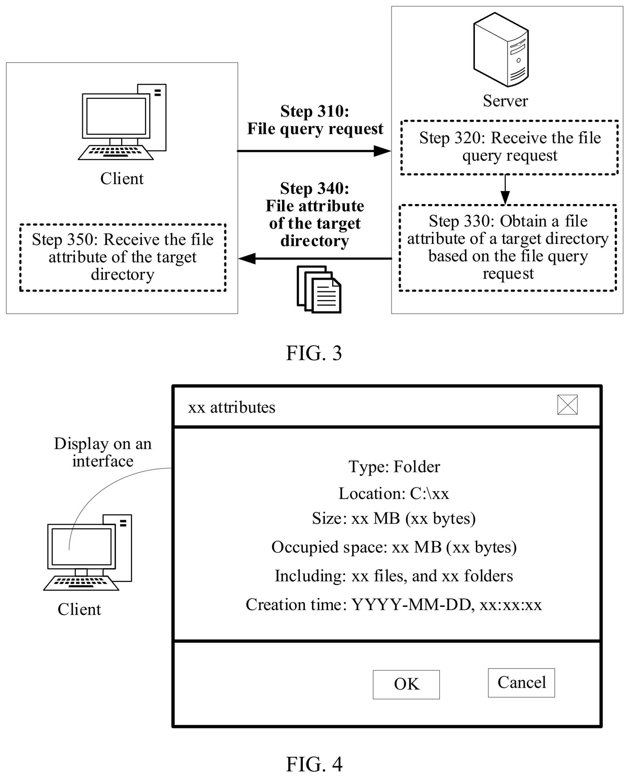

The following describes in detail the file query method provided in this application with reference to FIG. 3 to FIG. 6. FIG. 3 is a schematic flowchart of a file query method according to this application. Herein, an example in which the client 210 sends the file query request and receives the file attribute of the target directory sent by the server 220 in FIG. 2 is mainly used for description. As shown in FIG. 3, the method may include the following steps.

Step 310: The client 210 sends a file query request.

The client 210 sends the file query request to the server 220, where the file query request may indicate to query a file attribute of a target directory. The target directory may be a root directory, for example, a disk directory, or may be a subdirectory at any level that is included in the root directory, for example, a lower-level subdirectory included in the disk directory. The file attribute of the target directory may indicate a file organization structure attribute of the target directory. The attribute may be some descriptive information about a file, and the attribute includes at least one of a size, occupied space, a quantity, a type, a location, creation time, or the like. Herein, the size may refer to actual file storage space, and the occupied space may refer to a size of disk space occupied by the file. A value for the disk space occupied by the file may be greater than the value for the file storage space.

In some embodiments, the target directory may include a file, or may include a file and a folder, and the folder may further include a file and a subfolder. A file organization structure of the target directory may indicate a logical structure of the file included in the target directory. Optionally, the file organization structure of the target directory may alternatively indicate a logical structure of the folder included in the target directory and a logical structure of the file included in the target directory.

Because the target directory has different file organization structures, the target directory may have different file attributes. For example, the file attribute of the target directory may include at least one of an attribute of the target directory, a file attribute of the file included in the target directory, or a folder attribute of the folder included in the target directory.

Optionally, the attribute of the target directory may include a total size of all files and folders included in the target directory, total occupied space, a total quantity of files, a total quantity of folders, a file type, and the like.

Optionally, the file attribute of the file included in the target directory may include a size, occupied space, a type, and the like of each file. Alternatively, sizes and occupied space of files are summarized to obtain a total size and occupied space of all files.

Optionally, the folder attribute of the folder included in the target directory may include a size, occupied space, a quantity of included files, a quantity of included subfolders, or the like of each folder. Alternatively, sizes, occupied space, quantities of included files, or quantities of included subfolders of folders are summarized to obtain a total size, total occupied space, a total quantity of included files, or a total quantity of included subfolders of all folders.

Because the file query request may indicate to query the file attribute of the target directory, the file query request may include an attribute parameter of at least one of a directory, a file, or a folder. The attribute parameter may include at least one of a size, occupied space, a quantity, a location, creation time, a file type, or the like. The size, the occupied space, and the quantity may be used as important general attribute parameters. The location and the creation time may be used as secondary general attribute parameters. The file type may be used as a type attribute parameter, and the file type may include at least one of document, table, image, video, audio, or the like. For example, the document includes a Word document, a PDF document, and the like. The table includes an Excel file, and the like. The image includes an RGB image, a PNG image, and the like.

In some embodiments, the attribute parameter of the directory may include a size, occupied space, a quantity of included files, a quantity of included folders, a location, creation time, a file type, and the like. The attribute parameter of the file may include a size, occupied space, a location, creation time, a file type, and the like. The attribute parameter of the folder may include a size, occupied space, a quantity of included files, a location, creation time, and the like.

Step 320: The server 220 receives the file query request.

The server 220 receives the file query request sent by the client 210, and obtains the file attribute of the target directory based on an attribute parameter of at least one of a to-be-queried directory, file, or folder included in the file query request. A specific implementation method is described in the following step 330.

Step 330: The server 220 obtains the file attribute of the target directory based on the file query request.

Because a plurality of clients may send file query requests to a same server, the file query request may further include a check value, and the check value includes at least one of a client identifier and a restart verification identifier. The client identifier may uniquely indicate a client. For example, a query _id identifier is used to represent the client identifier. The restart verification identifier may indicate whether a client is restarted. For example, a verifier identifier is used to represent the restart verification identifier.

In some embodiments, the file query request may be a file query command, a format of the file query command is set based on a file access protocol, and the file access protocol includes any one of an SMB, an NFS, or a NAS. The server 220 may obtain the file attribute of the target directory based on the file query command. For the format of the file query command, refer to an example in a subsequent embodiment.

In some other embodiments, to help collect statistics on and arrange a file based on a file type, the file query request may further include a file type identifier. For example, to query file attributes of all video files in the target directory, the file query request may indicate a server to query sizes, occupied space, quantities, and the like of all the video files in the target directory based on video file types.

After obtaining the file attribute of the target directory, the server 220 may send the file attribute of the target directory to the client 210 in a form of a packet, and the client 210 receives the file attribute of the target directory as an attribute result. A communication process includes steps 340 and 350.

Step 340: The server 220 sends the file attribute of the target directory.

Step 350: The client 210 receives the file attribute of the target directory.

Optionally, after the client 210 receives the file attribute of the target directory sent by the server, to enable the user to clearly and intuitively learn of the file attribute of the queried target directory, the file attribute of the target directory may be displayed on an interface of the client 210. FIG. 4 is a diagram of an interface for displaying a file attribute of a target directory according to this application. As shown in FIG. 4, an example in which the target directory is a folder in a directory in a drive C is used. After the client 210 receives a file attribute of the target directory, file attributes, for example, a type, a location, a size, occupied space, a quantity of included files, a quantity of included folders, and creation time, of the folder may be displayed on an interface of the client 210. The interface further includes "OK", "Cancel", and "Close" buttons.

The file attribute of the target directory may include file attributes of a plurality of files in the target directory. Compared with a case in which a client needs to send a file query request for each file, according to the file query method provided in this application, the client sends a file query request once, where the request indicates to query the file attributes of the plurality of files in the target directory, and receives attribute results of the plurality of files in the target directory, to improve file query efficiency. The query request and the attribute results are transmitted only once in a network, to reduce network bandwidth overheads.

In addition, compared with a case in which the client caches a file attribute of a file, and collects statistics on file attributes of a plurality of files, according to the file query method provided in this application, the client may receive a statistics collection result of the file attributes of the plurality of files without caching the file attributes of the files, and collecting statistics on and summarizing the file attributes of the files, to reduce consumption of memory resources and computing resources.

The following describes, with reference to an example, a process of obtaining the file attribute of the target directory based on the file query request.

An example in which the total occupied space of all the files and folders included in the target directory, the total quantity of folders, and the total quantity of files are obtained based on the file query request is used. A format of a file query command that is in the file query request and that is set based on the NAS protocol is PATH_INFO. For example, parameter content of PATH_INFO may include:

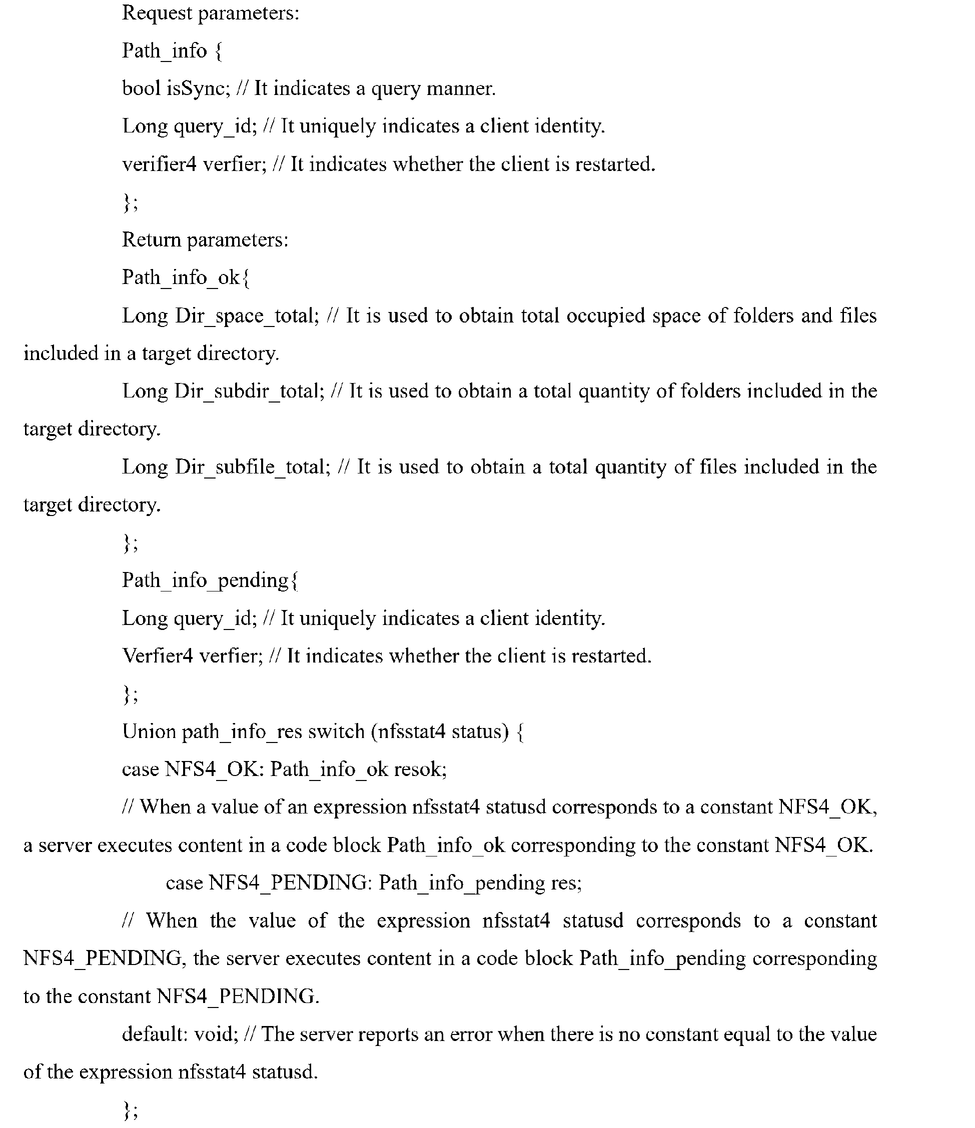

The foregoing step 310 to step 350 mainly describe a process in which the client 210 sends the file query request, and receives and displays the file attribute of the target directory. In some embodiments, to avoid excessively long waiting time for the client 210 to receive a file attribute result, the client 210 may send the file query request in a synchronous manner, or send the file query request in an asynchronous manner. In other words, a manner of querying a file attribute may include either a synchronous query manner or an asynchronous query manner. The following describes the two query manners with reference to the parameter content of the foregoing file query command.

The synchronous query manner may mean that the client 210 sends a current file query request to the server 220, and needs to wait for the server 220 to return a file attribute result, and then sends a subsequent file query request to the server 220.

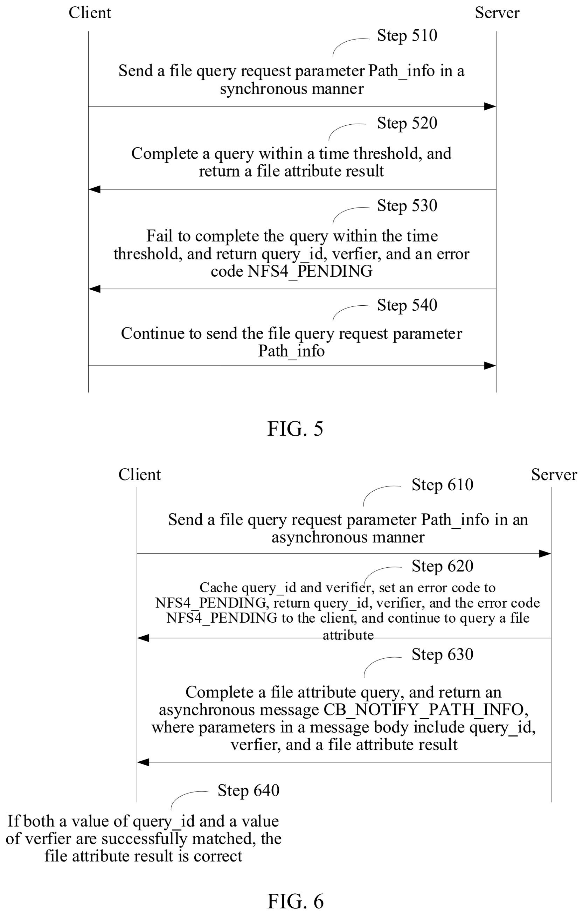

FIG. 5 is a diagram of a process in a synchronous query manner according to this application. As shown in FIG. 5, a client sends a file query request parameter. A value of isSync in a request parameter Path_info is true. This indicates the synchronous query manner. During an initial query, values of query_id and verifier in Path_info are both set to initial values. The initial values may be 0. For example, the client sends Path_info (query_id=0; verfier=0; isSync=true) (step 510).

If a server completes the query within a time threshold, the server parses a value of Dir_space_total, a value of Dir_subdir _total, and a value of Dir_subfile_total in Path_info_ok to obtain a file attribute of a target directory, and returns a file attribute result to the client (step 520).

If the server fails to complete the query within the time threshold, to avoid long waiting time for the client to receive the file attribute result, the server caches query_id and verfier, sets an error code to NFS4_PENDING, and returns query_id, verf, and the error code NFS4_PENDING to the client (step 530).

After the client receives the error code NFS4_PENDING, the client is triggered to continue to send the file query request parameter Path_info (step 540). Path_info includes query_id and verfier. After receiving a file query command Path_info, the server matches the value of query_id that is received with the value of query _id that is cached by the server, and matches the value of verfier that is received with the value of verfier that is cached by the server. If the values are successfully matched, the server has completed a file attribute query of the target directory and returns a file attribute result to the client.

The asynchronous query manner may mean that the client 210 sends a subsequent file query request after sending a current file query request to the server 220 without waiting for the server 220 to return a file attribute result corresponding to the current request before sending the subsequent request. After obtaining a file attribute result of the target directory through querying, the server 220 returns the file attribute result to the client.

FIG. 6 is a diagram of a process in an asynchronous query manner according to this application. As shown in FIG. 6, a client sends a file query request parameter Path_info. A value of isSync in the request parameter Path_info is set to false. This indicates the asynchronous query manner. During an initial query, values of query_id and verifier in Path_info are both set to initial values. The initial values may be 0. To be specific, the client sends Path_info (query _id=0; verfier=0; isSync=false) (step 610).

A server caches query_id and verfier, sets an error code to NFS4_PENDING, and returns query_id, verfier, and the error code NFS4_PENDING to the client. The server then continues a file attribute query (step 620).

After receiving the error code NFS4_PENDING, the client starts asynchronous message receiving. After completing the file attribute query, the server sends an asynchronous message CB_NOTIFY_PATH_INFO to the client. Parameters in a message body include query_id, verfier, and a file attribute result (step 630).

After receiving the asynchronous message, the client matches a value of query_id in the message body with a value of query_id in Path_info that is sent, and matches a value of verfier in the message body with a value of verfier in Path_info that is sent (step 640). If both the value of query_id and the value of verfier are successfully matched, the file attribute result returned by the server is correct. If the value of query _id is successfully matched, but the value of verfier fails to be matched, the file attribute result returned by the server is incorrect. The client may send a file query request again. If the client does not receive the asynchronous message, the client temporarily stops sending the file query request.

Parameter content of the asynchronous message CB_NOTIFY_PATH_INFO may include:

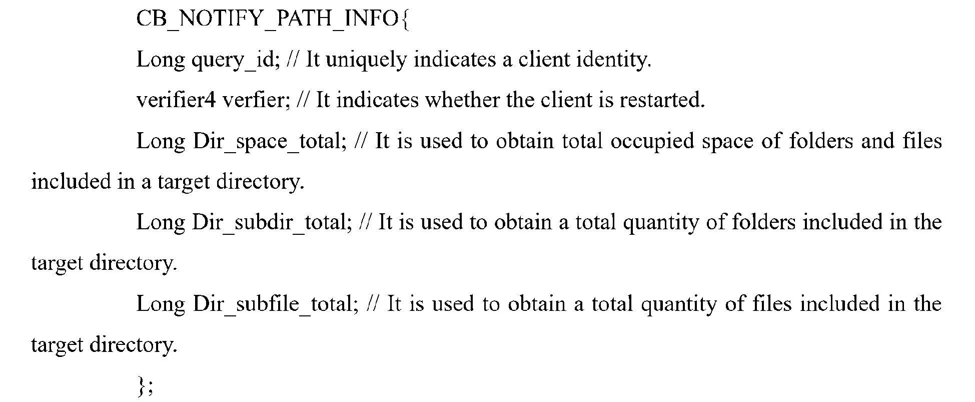

The foregoing mainly describes solutions provided in embodiments of this application from a method perspective. It may be understood that, to implement the foregoing functions, a computer device includes a corresponding hardware structure and/or software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

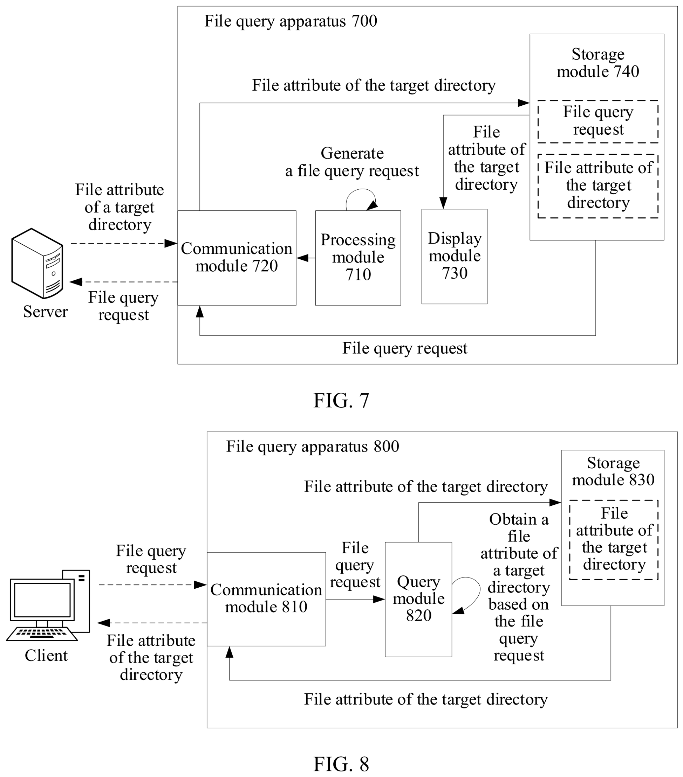

The foregoing describes in detail the file query method provided in an embodiment of this application with reference to FIG. 3 to FIG. 6. The following describes a file query apparatus provided in an embodiment of this application with reference to FIG. 7 and FIG. 8.

FIG. 7 is a diagram of a structure of a file query apparatus according to this application. These file query apparatuses may be configured to implement the function of the client in the foregoing method embodiments, and therefore can also implement beneficial effects of the foregoing method embodiments.

As shown in FIG. 7, the file query apparatus 700 includes a processing module 710, a communication module 720, a display module 730, and a storage module 740.

The processing module 710 is configured to generate a file query request.

The communication module 720 is configured to send the file query request, where the file query request indicates to query a file attribute of a target directory, and the file attribute of the target directory indicates a file organization structure attribute of the target directory. For example, the communication module 720 is configured to perform step 310 in FIG. 3.

The communication module 720 is further configured to receive the file attribute of the target directory. For example, the communication module 720 is configured to perform step 350 in FIG. 3.

Optionally, the file query apparatus 700 further includes the display module 730 and the storage module 740.

The display module 730 is configured to display the file attribute of the target directory.

The storage module 740 may be configured, in accordance with the foregoing method embodiments, to store the file query request, the file attribute of the target directory, and the like.

FIG. 8 is a diagram of a structure of another file query apparatus according to this application. These file query apparatuses may be configured to implement the function of the server in the foregoing method embodiments, and therefore can also implement beneficial effects of the foregoing method embodiments.

As shown in FIG. 8, the file query apparatus 800 includes a communication module 810, a query module 820, and a storage module 830.

The communication module 810 is configured to receive a file query request, where the file query request indicates to query a file attribute of a target directory, and the file attribute of the target directory indicates a file organization structure attribute of the target directory. For example, the communication module 810 is configured to perform step 320 in FIG. 3.

The query module 820 is configured to obtain the file attribute of the target directory based on the file query request. For example, the query module 820 is configured to perform step 330 in FIG. 3.

The communication module 810 is further configured to send the file attribute of the target directory. For example, the communication module 810 is configured to perform step 340 in FIG. 3.

Optionally, the file query apparatus 800 further includes the storage module 830. The storage module 830 may be configured, in accordance with the foregoing method embodiments, to store the file attribute of the target directory, and the like.

It should be understood that the file query apparatus 700 and the file query apparatus 800 according to embodiments of this application may correspondingly perform the method described in embodiments of this application. The foregoing and other operations and/or functions of units in the file query apparatus 700 and the file query apparatus 800 are respectively used to implement corresponding procedures of the methods in FIG. 3. For brevity, details are not described herein again.

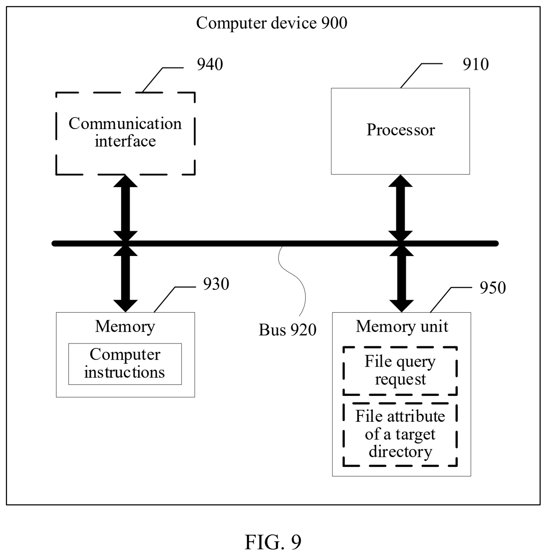

FIG. 9 is a diagram of a structure of a computer device according to this embodiment. As shown in FIG. 9, the computer device 900 includes a processor 910, a bus 920, a memory 930, a memory unit 950 (which may also be referred to as a main memory (main memory) unit), and a communication interface 940. The processor 910, the memory 930, the memory unit 950, and the communication interface 940 are connected through the bus 920.

It should be understood that, in this embodiment, the processor 910 may be a CPU, or the processor 910 may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like.

The communication interface 940 is configured to implement communication between the computer device 900 and an external device or component. In this embodiment, when being used in a client, the communication interface 940 is configured to send a file query request and receive a file attribute of a target directory. When being used in a server, the communication interface 940 is configured to receive a file query request and send a file attribute of a target directory. Optionally, the communication interface 940 may be further configured to exchange data with another computer device.

The bus 920 may include a path, configured to transfer information between the foregoing components (for example, the processor 910, the memory unit 950, and the memory 930). In addition to a data bus, the bus 920 may further include a power bus, a control bus, a status signal bus, and the like. However, for clear description, various types of buses are marked as the bus 920 in the figure. The bus 920 may be a peripheral component interconnect express (Peripheral Component Interconnect Express, PCIe) bus, an extended industry standard architecture (extended industry standard architecture, EISA) bus, a unified bus (Ubus or UB), a computer express link (CXL) bus, a cache coherent interconnect for accelerators (CCIX) bus, or the like.

In an example, the computer device 900 may include a plurality of processors. The processor may be a multi-core (multi-CPU) processor. The processor herein may be one or more devices, circuits, and/or computing units configured to process data (for example, computer program instructions). The processor 910 may implement a function of a client, to generate a file query request. Alternatively, the processor 910 may implement a function of a server, to obtain a file attribute of a target directory based on a file query request.

It should be noted that, in FIG. 9, only an example in which the computer device 900 includes one processor 910 and one memory 930 is used. The processor 910 and the memory 930 herein each indicate a type of device or component. In a specific embodiment, a quantity of each type of devices or components may be determined based on a service requirement.

The memory unit 950 may be configured, in accordance with the foregoing method embodiments, to store a file query request and a file attribute of a target directory. The memory unit 950 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 930 is configured to store a file query related program, and may be a solid-state drive or a hard disk drive.

It should be understood that the computer device 900 according to this embodiment may correspond to the file query apparatus 700 and the file query apparatus 800 in this embodiment, and may correspond to a corresponding body in FIG. 3. In addition, the foregoing and other operations and/or functions of modules in the file query apparatus 700 and the file query apparatus 800 are respectively used to implement corresponding procedures in FIG. 3. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computer device. Certainly, the processor and the storage medium may alternatively exist as discrete components in a network device or a terminal device.

This application further provides a chip system. The chip system includes a processor, configured to implement a function of a data processing unit in the foregoing method. In a possible design, the chip system further includes a memory, to store program instructions and/or data. The chip system may include a chip, or may include a chip and another discrete component.

All or a part of the foregoing embodiments may be implemented by software, hardware, firmware, or any combination thereof. When software is used to implement the foregoing embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc (digital video disc, DVD); or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A file query method, comprising:
sending a file query request, wherein the file query request indicates to query a file attribute of a target directory, and the file attribute of the target directory indicates a file organization structure attribute of the target directory; and
receiving the file attribute of the target directory.

2. A file query method, comprising:
receiving a file query request, wherein the file query request indicates to query a file attribute of a target directory, and the file attribute of the target directory indicates a file organization structure attribute of the target directory;
obtaining the file attribute of the target directory based on the file query request; and
sending the file attribute of the target directory.

3. The method according to claim 1 or 2, wherein the file query request comprises an attribute parameter of at least one of a directory, a file, or a folder.

4. The method according to claim 3, wherein the attribute parameter comprises at least one of a size, occupied space, a quantity, or a file type.

5. The method according to claim 3 or 4, wherein the file attribute of the target directory comprises at least one of an attribute of the target directory, a file attribute of a file comprised in the target directory, or a folder attribute of a folder comprised in the target directory.

6. The method according to any one of claims 1 to 5, wherein the target directory comprises a root directory or a subdirectory at any level that is comprised in the root directory.

7. The method according to any one of claims 1 to 6, wherein the file query request further comprises a check value, and the check value comprises at least one of a client identifier and a restart verification identifier.

8. The method according to any one of claims 1 to 7, wherein a format of the file query request is set based on a file access protocol, and the file access protocol comprises any one of a server message block SMB protocol, a network file system NFS protocol, or a network attached storage NAS protocol.

9. The method according to any one of claims 1 and 3 to 8, wherein sending the file query request comprises:
sending the file query request in a synchronous manner.

10. The method according to any one of claims 1 and 3 to 8, wherein sending the file query request comprises:
sending the file query request in an asynchronous manner.

11. A file query apparatus, wherein the file query apparatus comprises:
a module that performs an operation step of the method according to any one of claims 1 and 3 to 10, or a module that performs an operation step of the method according to any one of claims 2 to 8.

12. A computer device, comprising a memory and a processor, wherein the memory is configured to store a set of computer instructions; and when executing the set of computer instructions, the processor performs an operation step of the method according to any one of claims 1 and 3 to 10, or the processor is configured to perform an operation step of the method according to any one of claims 2 to 8.

13. A communication system, wherein the communication system comprises a client and a server, the client is configured to perform an operation step of the method according to any one of claims 1 and 3 to 10, and the server is configured to perform an operation step of the method according to any one of claims 2 to 8.
